# EUROPEAN PATENT APPLICATION

(11) **EP 4 503 462 A1**
(43) Date of publication of application: **05.02.2025**
(21) Application number: 23779257.7
(22) Date of filing: 06.03.2023
(51) Int. Cl.: H04B 7/06, H04B 7/08, H04W 8/22, H04W 16/28, H04W 24/10, H04W 28/16, H04W 88/02

(54) **TERMINAL DEVICE FOR COMMUNICATION CONTROL WITH CONSIDERATION GIVEN INTO PLACEMENT OF ANTENNAS, CONTROL METHOD, AND PROGRAM**

(30) Priority: 29.03.2022 JP 2022053612
(71) Applicant: KDDI Research, Inc., Fujimino-shi, Saitama 356-8502 (JP)
(72) Inventor: KANNO, Issei, Fujimino-shi, Saitama 356-8502 (JP); OHSEKI, Takeo, Fujimino-shi, Saitama 356-8502 (JP); KAMIWATARI, Shunsuke, Fujimino-shi, Saitama 356-8502 (JP)
(74) Representative: Mathys & Squire
(86) International application number: PCT/JP2023/008235
(87) International publication number: WO 2023/189228

(57) **Abstract**

A terminal device that comprises a plurality of antennas measures a signal transmitted from a base station device in a network to which the terminal device belongs, using each of the plurality of antennas, performs determination of whether or not a first antenna and a second antenna included in the plurality of antennas has a predetermined characteristic in common, the predetermined characteristic being specified based on the measured signal, and notifies the network to which the terminal device belongs of information indicating a result of the determination.

## Description

### TECHNICAL FIELD

The present invention relates to a communication control technology according to an arrangement of antennas in a terminal device.

### BACKGROUND ART

In accordance with the standard of the Third Generation Partnership Project (3GPP), wireless communication systems are widely used in which a plurality of geographically distributed base station devices provide a wireless communication service to a terminal device within a range of electromagnetic waves transmitted by each base station device. In such a wireless communication system, various types of communication control are performed according to the state of a transmission path between an antenna of the base station device and an antenna of the terminal device.

In response to wireless communication being used in a variety of situations, the configurations of terminal devices are becoming more diverse. For example, not only small terminal devices such as conventional mobile phones, but also terminal devices mounted on large objects such as vehicles can be used. In addition, in fixed wireless access (FWA) using a cellular communication system, a wireless device on the user side can be used as a terminal device of the cellular communication system.

### SUMMARY OF INVENTION

### TECHNICAL PROBLEM

Conventionally, when a terminal device has a plurality of antennas, it is assumed that all of these antennas are arranged inside a small terminal device, and therefore the characteristics of the transmission paths between the plurality of antennas and the antenna of the base station device are generally treated as being the same. On the other hand, as terminal devices become more diverse, it is assumed that the plurality of antennas of the terminal devices are arranged at locations spaced apart from each other, and the characteristics of the transmission paths between the plurality of antennas and the antenna of the base station device will differ significantly. In such a case, if the characteristics of the transmission paths in the plurality of antennas of the terminal device are treated as being generally the same, it is difficult to obtain sufficient communication quality.

### SOLUTION TO PROBLEM

The present invention provides a method for enabling execution of appropriate communication control corresponding to an arrangement of antennas in a terminal device.

A terminal device according to one aspect of the present invention is a terminal device comprising: a plurality of antennas; measurement means for measuring a signal transmitted from a base station device in a network to which the terminal device belongs, using each of the plurality of antennas; determination means for performing determination of whether or not a first antenna and a second antenna included in the plurality of antennas has a predetermined characteristic in common, the predetermined characteristic being specified based on the measured signal; and notification means for notifying the network to which the terminal device belongs of information indicating a result of the determination.

### ADVANTAGEOUS EFFECTS OF INVENTION

According to the present invention, it is possible to execute appropriate communication control corresponding to an arrangement of antennas in a terminal device.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an example of a system configuration.
FIG. 2 is a diagram illustrating an example of a hardware configuration of a device.
FIG. 3 is a diagram illustrating an example of a functional configuration of a terminal device.
FIG. 4 is a diagram illustrating an example of a functional configuration of a base station device.
FIG. 5 is a diagram illustrating an example of a flow of processing executed in the system.
FIG. 6 is a diagram illustrating an example of notified information.
FIG. 7 is a diagram illustrating an example of notified information.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### System Configuration

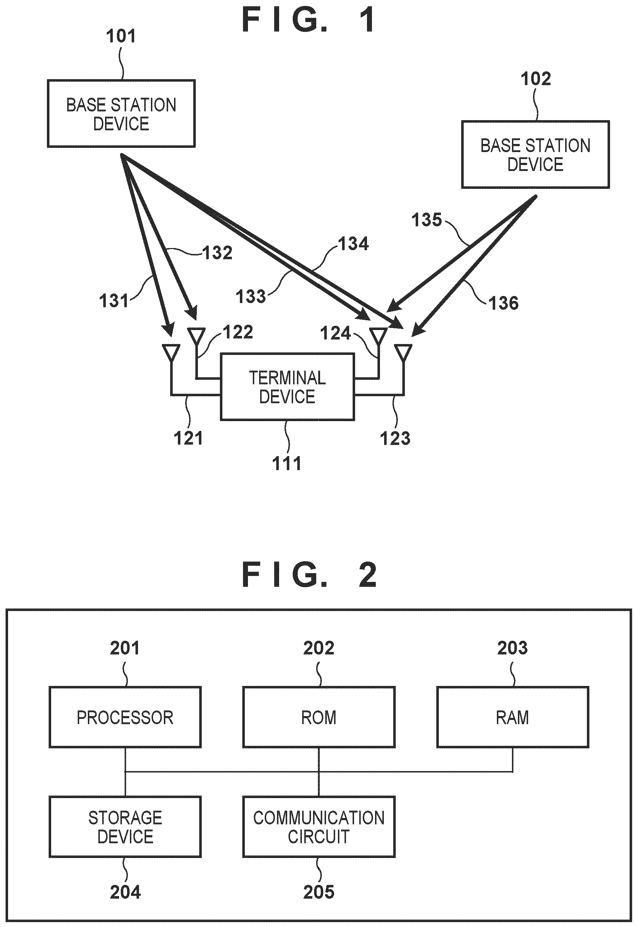

FIG. 1 shows an example of a configuration of a wireless communication system according to this embodiment. The wireless communication system may be, for example, a cellular communication system conforming to the fifth generation (5G) standard standardized by the 3rd Generation Partnership Project (3GPP). However, this is just one example, and the following discussion may also be applied to wireless communication systems conforming to conventional standards such as Long Term Evolution (LTE), standards from the sixth generation and onward, or the like, and may also be applied to wireless communication systems other than cellular communication systems.

This wireless communication system includes, for example, a base station device 101 and a terminal device 111. Note that the base station device 101 is a wireless access network node connected to a core network, and the network may of course also include other network nodes, but for simplicity of description, such configurations are omitted in FIG. 1. Here, it is assumed that the terminal device 111 has a plurality of (at least two) antennas, and that among the plurality of antennas, an antenna 121 and an antenna 122 are arranged at positions spaced significantly apart from an antenna 123 and an antenna 124. In this case, it is assumed that the antenna 121 and the antenna 122 have roughly the same characteristics with respect to the electromagnetic waves arriving from the base station device 101. For example, the reception timings of electromagnetic waves received by the antenna 121 and the antenna 122 are roughly the same, the same settings can be used for reception timing control, such as timing control for Fourier transform, and the same settings can be used for transmission timing control, such as timing advance. That is, in the communication via the antenna 121 and the antenna 122, common communication timing control (timing control in at least one of the uplink and the downlink) can be used. Similarly, the antenna 123 and the antenna 124 are assumed to have roughly the same characteristics with respect to electromagnetic waves arriving from the base station device 101, and for example, common communication timing control can be applied to them. On the other hand, it can be assumed that the antenna 121 or antenna 122 and the antenna 123 or antenna 124 have different characteristics from each other. For this reason, if common communication timing control is applied to the antenna 121 and the antenna 123, it may be impossible to perform communication appropriately. For example, in the downlink, a Fourier transform window setting that is appropriate for the antenna 121 may not be appropriate for the antenna 123, making it impossible to ensure orthogonality.

Also, for example, the terminal device 111 can use a plurality of panels to communicate with different transmission and reception points within the network. In this case, since it is assumed that the characteristics will differ significantly from panel to panel, it may not be appropriate to use a common setting for communication using a plurality of panels. Note that although separate settings can be applied to each of the plurality of antennas, the processing can become more complicated as the number of antennas increases.

For this reason, in this embodiment, when electromagnetic waves arriving from the base station device 101 are detected via a plurality of antennas, it is possible to decide whether to apply the same setting control or a different setting control depending on whether or not the respective predetermined characteristics are the same as each other. For this reason, the terminal device 111 notifies the base station device 101 (a network node within the network) of, for example, information that enables the base station device 101 to specify at least one of a second antenna that has a predetermined characteristic in common with a first antenna among the plurality of antennas that are included in the terminal device 111, and a third antenna that does not have the predetermined characteristic in common. For example, the terminal device 111 can notify the base station device 101 that the antenna 121 and the antenna 122 have a predetermined characteristic in common. In addition, the terminal device 111 may notify the base station device 101 that the antenna 121 does not have the predetermined characteristic in common with the antenna 123 and the antenna 124. Also, the terminal device 111 may notify the base station device 101 that, for example, the antenna 121 and the antenna 122 belong to a first group, and the antenna 123 and the antenna 124 belong to a second group. In this case, it can be indicated that two antennas in the same group have a predetermined characteristic in common with each other, and two antennas in different groups do not have a predetermined characteristic in common with each other. Based on this notification, the network node (e.g., base station device 101) performs setting and control of communication that is the same for an antenna group that has the predetermined characteristic in common, and performs setting and control of communication independently for an antenna group that does not have the predetermined characteristic in common.

In one example, the predetermined characteristic relates to the magnitude of delay observed regarding electromagnetic waves transmitted from the base station device 101 or the base station device 102 and arriving at the terminal device 111, or electromagnetic waves transmitted from the terminal device 111 and arriving at the base station device 101 or the base station device 102. In this case, based on the differences between the magnitude of delay at the antenna 121 and the magnitudes of delay at the other antennas, an antenna for which the difference does not exceed a predetermined value is treated as an antenna that has the predetermined characteristic in common with the antenna 121. In addition, an antenna for which the difference exceeds the predetermined value can be treated as an antenna that does not have the predetermined characteristic in common with the antenna 121. Note that the magnitude of the delay in this context can be the average value of the time difference between when electromagnetic waves transmitted from the base station device 101 or the base station device 102 arrive at the terminal device 111 for each antenna. In addition, the magnitude of the delay at each antenna may be specified using the timing at which the electromagnetic waves arrive at any one of the antennas as a criterion.

The network node can apply the same communication timing control to a group of antennas in which the timing at which electromagnetic waves transmitted from the base station device 101 or the base station device 102 arrive at the terminal device 111 is sufficiently close, that is, a group of antennas that have the same characteristic regarding the magnitude of delay. On the other hand, if the network node applies the same communication timing control to an antenna group that do not have the characteristic regarding the magnitude of delay in common, it may be difficult to ensure orthogonality, and therefore the network node can apply independent communication timing controls to these antennas. The communication timing control can include, for example, setting the timing advance used when transmitting an uplink signal. In addition, the network node can notify the terminal device 111 of setting information that enables execution of different reception controls, for example, setting Fourier transform windows corresponding to different timings, for the antennas 121 and 122 and the antennas 123 and 124. In addition, the network node can perform the same setting and control of uplink transmission power control for an antenna group that has a characteristic related to the magnitude of delay in common, and can independently perform setting and control of uplink transmission power control for an antenna group that has different characteristics related to the magnitude of delay. It is assumed that antennas with significantly different average delays will have different magnitudes of propagation loss due to the difference in the magnitude of the average delay. For this reason, common transmission power control can be set and controlled for an antenna group that has roughly the same average delay, and transmission power control can be set and controlled independently for an antenna group that does not have the same average delay.

In addition, in one example, the predetermined characteristic relates to the magnitude of delay spread observed for electromagnetic waves transmitted from the base station device 101 or the base station device 102 and arriving at the terminal device 111, or for electromagnetic waves transmitted from the terminal device 111 and arriving at the base station device 101 or the base station device 102. In this case, based on the differences between the magnitude of the delay spread at the antenna 121 and the magnitudes of the delay spread at other antennas, an antenna for which the difference does not exceed a predetermined value is treated as an antenna that has the predetermined characteristic in common with the antenna 121. Also, an antenna for which the difference exceeds the predetermined value can be treated as an antenna that does not have the predetermined characteristic in common with the antenna 121. Also, if a correlation value between the shape of the delay spread at the antenna 121 and the shape of the delay spread is calculated, an antenna for which the correlation value exceeds a predetermined value is treated as an antenna that has the predetermined characteristic in common with the antenna 121. Also, an antenna for which the correlation value does not exceed a predetermined value can be treated as an antenna that does not have the predetermined characteristic in common with the antenna 121.

A network node can give, for example, the same Sounding Reference Signal (SRS) setting to an antenna group that has the delay spread characteristic in common. On the other hand, the SRS setting can be applied independently to an antenna group that does not have the delay spread characteristic in common. Here, the SRS setting can include, for example, setting of the density of frequency resources over which the SRS is to be transmitted. That is, the number of subcarriers on which the SRS is transmitted can be set to be different for each of the plurality of antennas of the terminal device 111. In this way, a common SRS setting is applied to an antenna group that has the delay spread characteristic in common, and separate settings are applied independently to an antenna group that does not have the delay spread characteristic in common, whereby an SRS setting appropriate for the transmission path can be used for each of the plurality of antennas with significantly different transmission path conditions.

In addition, in one example, the predetermined characteristic relates to the direction in which the electromagnetic waves transmitted from the base station device 101 or the base station device 102 arrive at the terminal device 111. In this case, based on the difference between the direction of arrival of electromagnetic waves at the antenna 121 and the direction of arrival of electromagnetic waves at other antennas, an antenna for which the difference does not exceed a predetermined value is treated as an antenna that has the predetermined characteristic in common with the antenna 121. In addition, an antenna for which the difference exceeds the predetermined value can be treated as an antenna that does not have the predetermined characteristic in common with the antenna 121. The network node can use the same settings and controls for beam control for an antenna group that has the characteristic of the direction of arrival of electromagnetic waves in common. On the other hand, settings and controls for beam control can be applied independently to an antenna group that does not have the delay spread characteristic in common. Here, the settings for beam control may include, for example, a channel state information-reference signal (CSI-RS) setting.

Note that it is possible to adaptively classify whether or not each of the antennas 121 to 124 has a predetermined characteristic in common with another antenna, according to the result of measuring the wireless environment using the antennas 121 to 124 in the terminal device 111. That is, the terminal device 111 can, for example, measure a signal transmitted from the base station device 101 and, based on the measured signal, specify an antenna group that has the above-mentioned predetermined characteristic in common or a combination of antennas that do not have the predetermined characteristic in common. Then, the terminal device 111 notifies the base station device 101 of the result of the specification. Based on the notification, the base station device 101 can execute common setting control processing for an antenna group among the plurality of antennas that has the predetermined characteristic in common, and execute independent setting control processing for an antenna that does not have the predetermined characteristic in common.

In this embodiment, the terminal device 111 specifies a propagation characteristic for each of the antennas 121 to 124. For example, the terminal device 111 can specify, with respect to communication with the base station device 101, the channel response, the timing of the Fourier transform, and which beam to use for communication. In one example, the terminal device 111 performs statistical processing on the propagation characteristic, and specifies a feature amount indicating a predetermined characteristic related to the transmission path between the terminal device 111 and the base station device 101 for each antenna included in the terminal device 111. Note that the feature amount indicating the predetermined characteristic may include, for example, at least one of transmission path loss, delay profile, Doppler spread, Doppler shift, average delay, and delay spread. Then, the terminal device 111 can determine whether or not the plurality of antennas included in the terminal device 111 have the predetermined characteristic in common with each other by comparing the feature amounts for each antenna. For example, if the difference between the feature amounts relating to two antennas is less than or equal to a predetermined value, the terminal device 111 determines that the two antennas have the predetermined characteristic corresponding to that feature amount in common. On the other hand, if the difference between the feature amounts for the two antennas exceeds the predetermined value, the terminal device 111 determines that the two antennas do not have the predetermined characteristic corresponding to the feature amount in common. That is, two antennas having similar feature amounts indicating a predetermined characteristic can be decided to be a pair of antennas having the predetermined characteristic in common. In addition, for example, if the predetermined characteristic is a feature amount expressed by a waveform or a sequence, the terminal device 111 calculates a correlation value of the waveform or sequence for each of the two antennas, and if the correlation value exceeds a specified value, the terminal device 111 can determine that the two antennas have the predetermined characteristic corresponding to that feature amount in common. In addition, if the correlation value does not exceed the predetermined value, the terminal device 111 can determine that the two antennas do not have the predetermined characteristic corresponding to the feature amount in common. Note that notification of the predetermined value used as a criterion for determining whether or not the predetermined characteristic is held in common may be performed from the base station device 101 to the terminal device 111, or the predetermined value may be registered in a storage device within the terminal device 111 when the terminal device 111 is manufactured. Also, the predetermined value may be notified from the network to the terminal device 111 when the terminal device 111 is registered with the network, and the predetermined value may be maintained as-is even if the base station device to which the terminal device 111 is connected or the serving cell changes.

The terminal device 111 can notify the base station device 101 (network) of, for example, information indicating which predetermined characteristic a combination of two antennas among the antennas 121 to 124 have in common. For example, it is assumed that the transmission path loss and the Doppler spread are used as the predetermined characteristics. At this time, as an example, the terminal device 111 notifies the base station device 101 of information focusing on the antenna 121, such as the fact that the antenna 121 and the antenna 122 have the transmission path loss and Doppler spread in common, the antenna 121 and the antenna 123 have only the transmission path loss in common, and the antenna 121 and the antenna 124 have none of the characteristics in common. In addition, the terminal device 111 can further notify the base station device 101 of information such as the fact that the antenna 122, the antenna 123, and the antenna 124 have only the transmission path loss in common and the antenna 123 and the antenna 124 have the transmission path loss and Doppler shift in common. Note that this is just one example, and the terminal device 111 can specify whether or not a first antenna among a plurality of antennas included in the terminal device 111 and a second antenna among the plurality of antennas have a predetermined characteristic in common based on the result of measuring wireless signals, and can notify the base station device 101 of the specification result. Note that if the terminal device 111 determines only whether or not the two antennas have only one specific predetermined characteristic in common, the terminal device 111 does not need to notify the base station device 101 of information indicating which characteristic is held in common. Note that with regard to a plurality of predetermined characteristics, the base station device 101 may be notified of information according to which it is possible to specify whether or not every combination of two antennas among the plurality of antennas included in the terminal device 111 has each of the plurality of predetermined characteristics in common.

Note that the terminal device 111 may notify the base station device 101 of the predetermined characteristics that the combination of two antennas have in common, using Quasi Co-Location (QCL) types defined in the 3GPP 5G standard. For example, QCL type A can indicate that the Doppler shift, Doppler spread, average delay, and delay spread characteristics are held in common, and QCL type B can indicate that the Doppler shift and Doppler spread characteristics are held in common. That is, for example, if the terminal device 111 determines based on the result of measuring a signal from the base station device 101 that the antenna 121 and the antenna 122 have the Doppler shift, Doppler spread, average delay, and delay spread characteristics in common, the terminal device 111 can notify the base station device 101 of QCL type A as the relationship between the antenna 121 and the antenna 122.

Note that, as described above, for all combinations of two antennas among the plurality of antennas included in the terminal device 111, notification may be given as to whether or not they have a predetermined characteristic in common, or which predetermined characteristic they have in common, and alternatively, the plurality of antennas may be classified into a plurality of groups, and notification may be given as to whether or not the groups have a predetermined characteristic in common. That is, the antennas 121 to 124 included in the terminal device 111 may be grouped in advance, and it may be determined whether or not two groups have a predetermined characteristic in common. For example, the antennas are grouped in advance based on the positional relationship in which the antennas are arranged. In one example, the antennas 121 to 124 included in the terminal device 111 are classified into a first group including the antennas 121 and 122 and a second group including the antennas 123 and 124. Then, the terminal device 111 can determine whether or not a predetermined characteristic is held in common between the first group and the second group. In this case, for example, if it is determined that the first group and the second group have a predetermined characteristic in common, the predetermined characteristic is treated as being held in common between the antenna 121, the antenna 123, and the antenna 124, and also between the antenna 122, the antenna 123, and the antenna 124.

The terminal device 111 can calculate a first statistical value of a feature amount indicating a predetermined characteristic for one or more antennas belonging to the first group and a second statistical value of a feature amount indicating a predetermined characteristic for one or more antennas belonging to the second group, and can determine whether or not the first group and the second group have the predetermined characteristic in common by comparing the first statistical value and the second statistical value. Here, the statistical value can be, for example, an average value or a median value. If the difference between the statistical values is less than or equal to a predetermined value, the terminal device 111 can determine that the first group and the second group have a predetermined characteristic in common. In addition, the statistical value may be expressed by a distribution, and the terminal device 111 may determine that the first group and the second group have a predetermined characteristic in common if a correlation value of the distribution exceeds a predetermined value. Note that the predetermined value here may also be notified from the base station device 101 to the terminal device 111, or may be registered in a storage device within the terminal device 111 when the terminal device 111 is manufactured. The predetermined value may also be notified from the network to the terminal device 111 when the terminal device 111 is registered with the network, and may be maintained as-is even if the base station device to which the terminal device is connected or the serving cell changes.

In addition, as described above, the terminal device 111 may determine whether or not a combination of one of the one or more antennas belonging to the first group and one of the one or more antennas belonging to the second group has a predetermined characteristic in common, and determine whether or not the first group and the second group have a predetermined characteristic in common. For example, the terminal device 111 may determine whether or not all combinations of each of one or more antennas belonging to the first group and each of one or more antennas belonging to the second group have a predetermined characteristic in common, and if it is determined that a combination of antennas does not have the predetermined characteristic in common, the terminal device 111 may determine that the first group and the second group do not have the predetermined characteristic in common . In addition, the terminal device 111 may determine that the first group and the second group have a predetermined characteristic in common, for example, if it is determined that all combinations of antennas belonging to the first group and antennas belonging to the second group have a predetermined characteristic in common. In addition, the terminal device 111 may determine that the first group and the second group have a predetermined characteristic in common if it is determined that a predetermined number or more of combinations of antennas belonging to the first group and antennas belonging to the second group have a predetermined characteristic in common. In this case, the terminal device 111 may determine that the first group and the second group do not have the predetermined characteristic in common, for example, if it is determined that only a number of combinations of antennas belonging to the first group and antennas belonging to the second group that is less than the predetermined number have the predetermined characteristic in common.

Note that the terminal device 111 may determine whether or not the first group and the second group have a plurality of predetermined characteristics in common, and the terminal device 111 may notify the base station device 101 of which characteristics among the plurality of characteristics are held in common. At this time, the terminal device 111 may perform notification of, for example, the characteristic that the first group and the second group have in common by using the QCL type.

In addition, the terminal device 111 can perform the above-mentioned notification periodically, when a predetermined event occurs, such as when a combination of antennas having a characteristic in common changes, or when a request is received from the base station device 101. Note that when performing notification, the terminal device 111 may also perform notification of only the difference value from the previous notification. Note that the base station device 101 may also designate a predetermined characteristic for which the relationship is to be notified among the predetermined characteristics.

Note that the plurality of groups do not need to be decided on in advance, and the terminal device 111 may dynamically decide on the groups based on a signal received from the base station device 101. For example, the terminal device 111 may decide on the groups of antennas based on a predetermined feature amount such as transmission path loss. For example, the terminal device 111 can decide that the first antenna and the second antenna belong to the same group if the difference between the magnitude of the transmission path loss at the first antenna and the magnitude of the transmission path loss at the second antenna is less than or equal to a predetermined value. For example, if the difference in the magnitude of transmission path loss between the antennas 121 and 122, the difference in the magnitude of transmission path loss between the antennas 121 and 123, and the difference in the magnitude of transmission path loss between the antennas 122 and 123 are all a predetermined value or less, the terminal device 111 can decide that the antennas 121 to 123 belong to the same group. On the other hand, if the difference in the magnitude of transmission path loss between the antennas 121 and 122 and the difference in the magnitude of transmission path loss between the antennas 121 and 123 are a predetermined value or less, but the difference in the magnitude of transmission path loss between the antennas 122 and 123 exceeds the predetermined value, the terminal device 111 can determine that the antenna for which the value of the difference from the transmission path loss of the antenna 121 is smaller out of the antennas 122 and 123 belongs to the same group as the antenna 121. Note that this is just one example, and the groups may also be decided on in another way.

Note that the terminal device 111 may further specify the relationship between two antennas included in the group as described above, and notify the base station device 101 of the specified information. The terminal device 111 may also further notify the base station device 101 of the number of antenna groups. For example, if the plurality of antennas included in the terminal device 111 are classified into two groups, namely a first group and a second group, the terminal device 111 may notify the base station device 101 of information indicating that the number of groups is "2", information indicating whether or not the first group and the second group have a predetermined characteristic in common, and information indicating whether or not the antennas within each of the first group and the second group have a predetermined characteristic in common.

### Device Configuration

Next, the configuration of the terminal device 111 that executes the above-mentioned processing will be described. FIG. 2 is a diagram illustrating an example of the hardware configuration of the terminal device 111. Note that the base station device 101 can also have the same configuration. In one example, the terminal device 111 includes a processor 201, a ROM 202, a RAM 203, a storage device 204, and a communication circuit 205. The processor 201 is a computer including one or more processing circuits, such as a general-purpose CPU (Central Processing Unit) or an ASIC (Application Specific Integrated Circuit), and executes the overall processing of the device and each of the above-mentioned processes by reading out and executing programs stored in the ROM 202 or the storage device 204. The ROM 202 is a read-only memory that stores information such as programs related to the processes executed by the terminal device 111, and various parameters. The RAM 203 is a random access memory that functions as a workspace when the processor 201 executes a program, and the RAM 203 stores temporary information. The storage device 204 is constituted by, for example, a removable external storage device or the like. The communication circuit 205 includes, for example, a circuit for communicating with another device. Note that although FIG. 2 illustrates one communication circuit 205, the terminal device 111 can have a plurality of communication circuits. Note that the terminal device 111 of this embodiment may include a plurality of antennas, the plurality of antennas may be connected to one communication circuit 205, or one or more of the plurality of antennas may be connected to one communication circuit 205 and the other antennas may be connected to another communication circuit 205.

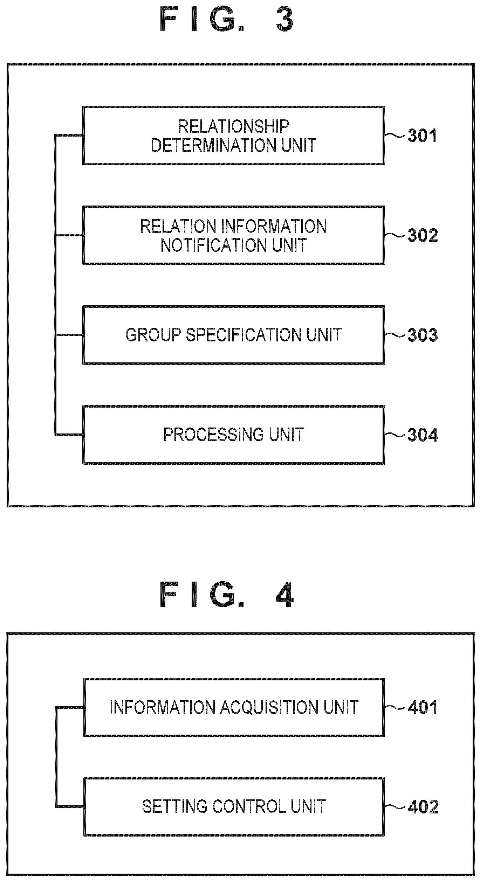

FIG. 3 is a diagram showing an example of the functional configuration of the terminal device 111. The terminal device 111 includes, for example, a relationship determination unit 301, a relationship information notification unit 302, a group specification unit 303, and a processing unit 304. The functions illustrated in FIG. 3 can be realized, for example, by the processor 201 executing a program stored in the ROM 202 or the storage device 204. Note that this is just one example, and some or all of the functions shown in FIG. 3 may be realized by dedicated hardware. Also, FIG. 3 shows only the functions related to this embodiment among the functions of the terminal device 111, and the terminal device 111 can of course have functions other than those shown in FIG. 3, such as functions naturally included in a terminal device in a cellular communication system.

The relationship determination unit 301 determines, based on a signal (e.g., a channel state information-reference signal (CSI-RS)) received from the base station device 101, a relationship indicating whether or not a first antenna and a second antenna among the plurality of antennas included in the terminal device 111 have a predetermined characteristic in common. The relationship information notification unit 302 notifies the base station device 101 of the result of the determination made by the relationship determination unit 301. The group specification unit 303 groups a plurality of antennas. Note that, for example, information on groups decided on in advance based on the positions at which antennas are arranged can be stored in advance, and the group specification unit 303 can specify the groups by referring to that information. In addition, the group specification unit 303 may adaptively group the antennas based on the signal from the base station device 101 as described above. Note that if the relationship between antennas is notified to the base station device 101, but the relationship between groups is not notified to the base station device 101, the group specification unit 303 may be omitted. In addition, if the relationship between groups is notified to the base station device 101, the relationship determination unit 301 determines the relationship between the groups. The processing unit 304 receives instruction information for control and setting from the base station device 101, and executes setting processing and control processing based on the instruction information. In this case, the base station device 101 can perform common setting control for antennas that have a predetermined characteristic in common, and can perform setting control independently for antennas that do not have the predetermined characteristic in common.

FIG. 4 is a diagram illustrating an example of a functional configuration of the base station device 101. The base station device 101 includes, for example, an information acquisition unit 401 and a setting control unit 402. The functions illustrated in FIG. 4 can be realized, for example, by the processor 201 executing a program stored in the ROM 202 or the storage device 204. Note that this is just one example, and some or all of the functions shown in FIG. 4 may be realized by dedicated hardware. In addition, FIG. 4 shows only the functions related to this embodiment among the functions included in the base station device 101, and the base station device 101 can of course have functions other than those shown in FIG. 4, such as functions naturally included in a base station device in a cellular communication system.

The information acquisition unit 401 acquires, from the terminal device 111, information according to which it is possible to specify whether or not a first antenna and a second antenna among a plurality of antennas included in the terminal device 111 have a predetermined characteristic in common. The setting control unit 402 executes setting and control of the terminal device 111 based on the information acquired by the information acquisition unit 401. In addition, the setting control unit 402 can notify the terminal device 111 of a predetermined value to be used as a criterion for determining whether or not the first antenna and the second antenna among the plurality of antennas included in the terminal device 111 have a predetermined characteristic in common.

### Flow of Processing

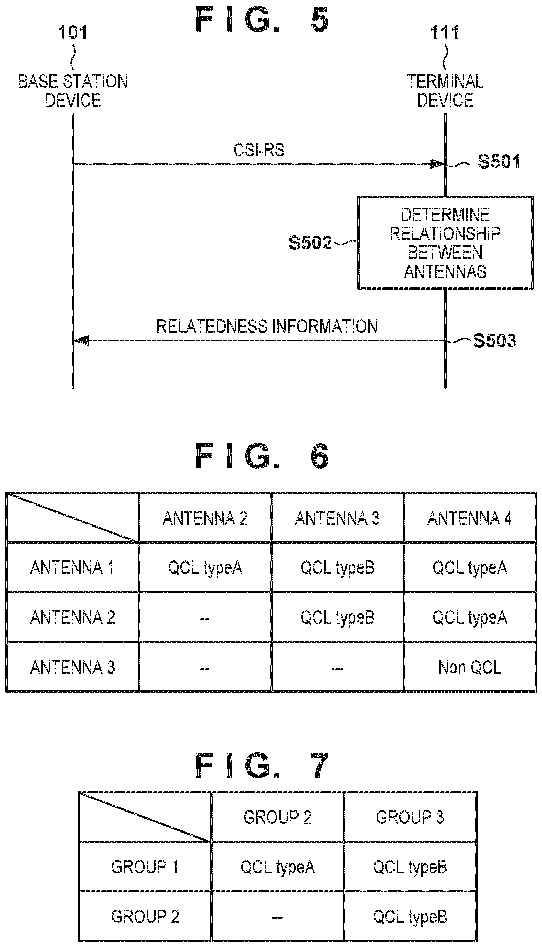

Next, an example of the flow of processing executed between the base station device 101 and the terminal device 111 will be described with reference to FIG. 5. In this processing, the terminal device 111 receives a predetermined signal such as a CSI-RS transmitted by the base station device 101 (step S501), and determines the relationship between the antennas by determining, based on the received signal, whether or not each combination of two antennas among the plurality of antennas included in the terminal device 111 has a predetermined characteristic in common (step S502). Note that the terminal device 111 may specify the relationship between groups of a plurality of antennas, and may further execute group classification for this purpose. Then, the terminal device 111 notifies the base station device 101 of the result of determining the relationship between the antennas (step S503). Thereafter, based on the notified relationship, the base station device 101 applies common setting control to antennas that have the predetermined characteristic in common, and applies individual setting control to antennas that do not have the predetermined characteristic in common. Note that the base station device 101 may notify the terminal device 111 in advance of a predetermined value that serves as a criterion for the determination in step S502.

An example of information notified from the terminal device 111 to the base station device 101 will be described with reference to FIG. 6 and FIG. 7. Note that in FIG. 6 and FIG. 7, the relationship between antennas is notified using the QCL type. In addition, FIG. 6 shows an example of a case of performing notification of the relationship between two individual antennas among a plurality of antennas included in the terminal device 111, and FIG. 7 shows an example of performing notification of the relationship between groups of antennas.

In the example of FIG. 6, focusing on an antenna 1, its relationship with antennas 2 and 4 is indicated by QCL type A, and its relationship with an antenna 3 is indicated by QCL type B. In addition, focusing on the antenna 2, its relationship with the antenna 3 is indicated by QCL type B, and its relationship with the antenna 4 is indicated by QCL type A. It is also shown that there is no predetermined characteristic that the antenna 3 and the antenna 4 have in common. In the example of FIG. 7, when focusing on a group 1, the relationship with a group 2 is indicated by QCL type A, and the relationship with a group 3 is indicated by QCL type B. In addition, the relationship between the group 2 and the group 3 is indicated by QCL type B. Note that these are merely examples, and notification of any information indicating a characteristic held in common can be performed instead of notification of information based on the QCL type.

In this way, the terminal device 111 can appropriately decide on the relationship between the antennas for each of the plurality of antennas, and based on that relationship, common setting control can be executed for antennas that have a characteristic in common, and individual setting control can be performed for antennas that do not have a characteristic in common. As described above, the relationship between antennas is adaptively determined, and therefore even if the antenna arrangement is changed, the relationship between the antennas is specified according to the situation, and appropriate setting control can be applied to the terminal device 111.

In this manner, it becomes possible to perform appropriate communication control in response to the diversification of antenna arrangements in terminal devices. This enables contribution to Goal 9 of the United Nations Sustainable Development Goals (SDGs), which is to "build resilient infrastructure, promote sustainable industrialization and foster innovation".

The invention is not limited to the foregoing embodiments, and various variations/changes are possible within the spirit of the invention.

This application claims priority based on Japanese Patent Application No. 2022-053612, filed on March 29, 2022, the entire contents of which is incorporated herein by reference.

## Claims

1. A terminal device comprising:
a plurality of antennas;
measurement means for measuring a signal transmitted from a base station device in a network to which the terminal device belongs, using each of the plurality of antennas;
determination means for performing determination of whether or not a first antenna and a second antenna included in the plurality of antennas has a predetermined characteristic in common, the predetermined characteristic being specified based on the measured signal; and
notification means for notifying the network to which the terminal device belongs of information indicating a result of the determination.

2. The terminal device according to claim 1,
wherein the notification means further notifies the network of information indicating the predetermined characteristic that the first antenna and the second antenna have in common.

3. The terminal device according to claim 2,
wherein the notification means notifies the network of information according to which it is possible to specify whether or not the first antenna and the second antenna have one or more of the predetermined characteristics in common.

4. The terminal device according to claim 3,
wherein the notification means uses a Quasi Co-Location (QCL) type to perform notification of the information according to which it is possible to specify whether or not the first antenna and the second antenna have the one or more of the predetermined characteristics in common.

5. The terminal device according to any one of claims 1 to 4,
wherein the determination means determines whether or not the first antenna and the second antenna have the predetermined characteristic in common by comparing a first feature amount indicating the predetermined characteristic for the first antenna and a second feature amount indicating the predetermined characteristic for the second antenna.

6. The terminal device according to any one of claims 1 to 4,
wherein the plurality of antennas are classified into a plurality of groups, and
the determination means determines whether or not the first antenna and the second antenna have the predetermined characteristic in common by determining whether or not a first group to which the first antenna belongs and a second group to which the second antenna belongs among the plurality of groups have the predetermined characteristic in common.

7. The terminal device according to claim 6,
wherein the determination means determines whether or not the first group and the second group have the predetermined characteristic in common by comparing a first statistical value of a feature amount indicating the predetermined characteristic for one or more antennas included in the first group and a second statistical value of a feature amount indicating the predetermined characteristics for one or more antennas included in the second group.

8. The terminal device according to claim 6,
wherein the determination means determines whether or not the first group and the second group have the predetermined characteristic in common by comparing a first feature amount indicating the predetermined characteristic for each of one or more antennas included in the first group and a second feature amount indicating the predetermined characteristic for each of one or more antennas included in the second group.

9. The terminal device according to any one of claims 6 to 8, further comprising
deciding means for deciding on the plurality of groups based on the predetermined characteristic for each of the plurality of antennas.

10. The terminal device according to any one of claims 6 to 9,
wherein the notification means further notifies the network of the number of groups included in the plurality of groups.

11. The terminal device according to any one of claims 6 to 10,
wherein the notification means further notifies the network of information indicating whether or not two antennas included in one group among the plurality of groups have the predetermined characteristic in common.

12. The terminal device according to any one of claims 1 to 11,
wherein the predetermined characteristic includes at least one of transmission path loss, Doppler shift, Doppler spread, average delay, and delay spread.

13. The terminal device according to any one of claims 1 to 12, further comprising
acquisition means for acquiring, from the network, a predetermined value to serve as a criterion to be used in determining whether or not the first antenna and the second antenna have the predetermined characteristic in common.

14. A control method to be executed by a terminal device including a plurality of antennas, the control method comprising:
measuring a signal transmitted from a base station device in a network to which the terminal device belongs, using each of the plurality of antennas;
performing determination of whether or not a first antenna and a second antenna included in the plurality of antennas has a predetermined characteristic in common, the predetermined characteristic being specified based on the measured signal; and
notifying a network to which the terminal device belongs of information indicating a result of the determination.

15. A program for causing a computer to function as the terminal device according to any one of claims 1 to 13.
